(19) **Europäisches Patentamt**

**European Patent Office**

**Office européen des brevets**

(11) **EP 0 780 190 B1**

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(51) Int Cl.$^7$: **B23K 26/14**

(21) Anmeldenummer: **96119428.9**

(22) Anmeldetag: **04.12.1996**

(54) **Laserbearbeitungskopf und Verfahren zum Laserschweissen**

Laser machining head and process for laser welding

Tête d'usinage au laser et procédé de soudage au laser

(84) Benannte Vertragsstaaten:
**DE FR GB IT**

(30) Priorität: **22.12.1995 DE 19548496**

(43) Veröffentlichungstag der Anmeldung:
**25.06.1997 Patentblatt 1997/26**

(73) Patentinhaber: **Deutsches Zentrum für Luft- und Raumfahrt e.V.**
**51147 Köln (DE)**

(72) Erfinder:
• **Opower, Hans, Prof. Dr. rer.nat.**
**82152 Krailling (DE)**
• **Volz, Robert, Dipl.-Ing.**
**70563 Stuttgart (DE)**
• **Weyer, Heinrich, Prof. Dr.-Ing.**
**53819 Neunkirchen (DE)**

(74) Vertreter: **Hoeger, Stellrecht & Partner**
**Uhlandstrasse 14 c**
**70182 Stuttgart (DE)**

(56) Entgegenhaltungen:
| | |
|---|---|
| **EP-A- 0 444 550** | **EP-A- 0 573 928** |
| **DE-A- 4 129 239** | **US-A- 4 778 693** |
| **US-A- 5 122 632** | **US-A- 5 477 025** |

**Beschreibung**

Die Erfindung betrifft einen Laserbearbeitungskopf gemäß dem Oberbegriff des Anspruchs 1.

Ein derartiger Laserbearbeitungskopf ist beispielsweise aus der US-A-5,477,025 bekannt.

Der Nachteil dieses Laserbearbeitungskopfes ist darin zu sehen, daß mit diesem keine ausreichende Abschirmung des Pulverkornstrahls und auch der Schmelzstelle erreichbar ist.

Der Erfindung liegt daher die Aufgabe zugrunde, einen Laserbearbeitungskopf der gattungsgemäßen Art derart zu verbessern, daß eine möglichst optimale Abschirmung des Pulverkornstrahls und der Schmelzstelle gegen Zumischungen von Gas aus der umgebenden Luft erfolgt.

Diese Aufgabe wird bei einem Laserbearbeitungskopf der eingangs genannten Art erfindungsgemäß dadurch gelöst, daß ein Innendurchmesser des Pulverkornkanals maximal das 10fache eines mittleren Pulverkorndurchmessers beträgt, und daß die den Pulverkornbeschleunigungskopf verlassenden Pulverkörner im Pulverkornstrahl im wesentlichen einer Geraden folgen.

Ferner ist insbesondere auch sichergestellt, daß das zur Beschleunigung der Pulverkörner eingesetzte Beschleunigungsgas das Strömungsprofil des den Pulverkornstrahl umgebenden Schutzgases nicht zusätzlich hinsichtlich seiner Homogenität soweit stört, daß eine nachteilige Abschirmung des Pulverkornstrahls gegenüber der Umgebung vorliegt.

Noch bessere Beschleunigung ist zu erreichen, wenn der Kanalinnendurchmesser maximal das 1,5fache, vorzugsweise sogar maximal das 3fache des Pulverkorndurchmessers beträgt.

Andererseits ist ein zu enger Innendurchmesser des Pulverkornkanals insofern problematisch, als dann der Pulverkornkanal zum Verstopfen neigt. Aus diesem Grund ist vorzugsweise vorgesehen, daß der Innendurchmesser des Pulverkornkanals mindestens das 1,5fache eines mittleren Pulverkorndurchmessers beträgt.

Hinsichtlich der Ausbildung des Pulverkornstrahls selbst wurden bislang keine näheren Angaben gemacht. So ist beispielsweise im einfachsten Fall vorgesehen, daß der Pulverkornstrahl durch einen Einzelstrahl gebildet ist. Ein derartiger einzelner Pulverkornstrahl hat allerdings den Nachteil, daß dieser - insbesondere wenn der Kanalinnendurchmesser im Rahmen der vorstehend genannten Größenordnungen liegt - hinsichtlich des Durchsatzes der Pulverkörner beschränkt ist.

Aus diesem Grund sieht eine Alternative vorteilhafte Lösung vor, die insbesondere die Möglichkeit schafft, einen höheren Pulverkorndurchsatz zu gewährleisten, daß der Pulverkornstrahl durch mindestens zwei, vorzugsweise mit mindestens zweizähliger Symmetrie, um die Mittelachse des Pulverkornstrahls herum angeordnete Pulverkornteilstrahlen gebildet ist.

Dabei wird zweckmäßigerweise jeder Pulverkornteilstrahl durch einen eigenen Pulverkornkanal erzeugt.

Hinsichtlich der weiteren Ausbildung der Pulverzufuhreinrichtung wurden im Rahmen der bisherigen Erläuterung der einzelnen Ausführungsbeispiele keine näheren Angaben gemacht. So sieht eine vorteilhafte Ausbildung der Pulverzufuhreinrichtung vor, daß diese eine unmittelbar stromaufwärts des Pulverkornkanals angeordnete und in diesen einmündende Zumischkammer aufweist, in welche Beschleunigungsgas einströmt und welcher die Pulverkörner durch eine Pulverkörnerfördereinrichtung zuführbar sind.

Vorzugsweise ist dabei vorgesehen, daß die Pulverkörner der Zumischkammer mit einem Fördergas vermischt zuführbar sind.

Das Fördergas kann dabei selbst als Beschleunigungsgas dienen. Es ist aber auch möglich, pulverfreies Beschleunigungsgas und die Pulverkörner mittels Fördergas der Zumischkammer zuzuführen.

Um keine Probleme hinsichtlich des Fördergases und des Beschleunigungsgases beim Schmelzvorgang selbst zu erhalten ist vorzugsweise vorgesehen, daß sich sowohl das Fördergas als auch das Beschleunigungsgas beim Schmelzvorgang innert verhalten. Im einfachsten Fall ist das Beschleunigungsgas und das Fördergas identisch mit dem Schutzgas zur Abschirmung der Schmelzstelle.

Das Strömungshomogenisierelement kann prinzipiell in unterschiedlichster Art ausgebildet sein. Beispielsweise wäre es denkbar, das Strömungshomogenisierelement mit einer Vielzahl von in Strömungsrichtung langgestreckten und relativ zu ihrer Länge dünnen Kanälen auszuführen, die letztlich in Summe dann nach dem Strömungshomogenisierelement eine homogene Gesamtströmung ergeben.

Besonders vorteilhaft ist es jedoch, wenn das Strömungshomogenisierelement eine Vielzahl von Feinturbulenzen erzeugende Öffnungen aufweist. In diesem Fall kann auf die relativ zu ihrem Durchmesser langgestreckten Kanäle mit dem hohen Strömungswiderstand verzichtet werden, und es ist lediglich erforderlich, durch Öffnungen Feinturbulenzen zu erzeugen, die letztlich in Summe nach dem Strömungshomogenisierelement im wesentlichen die gewünschte homogene Strömung ergeben.

Eine Möglichkeit, derartige Feinturbulenzen erzeugende Öffnungen zu realisieren, ist die, das Strömungshomogenisierelement als Sieb mit einer Vielzahl kleiner Öffnungen auszubilden, wobei dieses Sieb entweder durch eine dünne Platte mit einer Vielzahl nebeneinandersitzender Bohrungen oder als engmaschig geflochtenes Sieb aus Draht ausgebildet sein kann.

Vorzugsweise haben die Öffnungen dabei einen Durchmesser von kleiner 0,2 mm.

Eine besonders vorteilhafte Wirkung des Strömungshomogenisierelements ist dann erreichbar, wenn dies in einem Abstand von der Haubenöffnung angeordnet ist, welcher mindestens das 20fache eines Innendurchmessers des Pulverkornkanals beträgt.

Noch vorteilhafter ist es, wenn der Abstand mindestens das 50fach oder noch besser das 100fache des Innendurchmessers des Pulverkornkanals beträgt.

Hinsichtlich der Position des Strömungshomogenisierelements wurden bislang keine genaueren Angaben gemacht. So sieht ein vorteilhaftes Ausführungsbeispiel vor, daß das Strömungshomogenisierelement ungefähr in Höhe der Austrittsöffnung des Pulverkornkanals oder in Strömungsrichtung des Schutzgases stromaufwärts der Austrittsöffnung angeordnet ist. Damit ist die gewünschte Strömung des Schutzgases bereits im Bereich des unmittelbar aus der Austrittsöffnung austretenden Pulverkornstrahls existent und kann sich mit diesem zusammen bis zur Haubenöffnung ausbreiten um spätestens im Bereich der Haubenöffnung die gewünschte Abschirmung des Pulverkornstrahls insbesondere mit den erfindungsgemäßen Strömungsverhältnissen zu erhalten

Besonders zweckmäßig ist es im Rahmen der erfindungsgemäßen Lösung, wenn das Strömungshomogenisierelement zusammen mit der Haube eine Strömung mit einem Strömungsprofil erzeugt, welche bei Erreichen der Haubenöffnung einen Schutzgasstrom ergibt, welcher ein in Azimutalrichtung um eine Mittelachse des Pulverkornstrahls herum im wesentlichen homogenes Strömungsprofil aufweist.

Bei einer besonders vorteilhaften erfindungsgemäßen Lösung wird der Schutzgasstrom derart gebildet, daß dieser ein zur Mittelachse des Pulverkornstrahls symmetrisches Strömungsprofil aufweist und somit insgesamt wenig störanfällig gegen das mit dem Pulverkornstrahl aus der Austrittsöffnung austretende Beschleunigungsgas ist, welches in dem Schutzgasstrom abgebremst wird und sich mit diesem vermischt, während die Pulverkörner in dem Pulverkornstrahl bezogen auf das Beschleunigungsgas im wesentlichen unbeeinflußt weiterfliegen.

Bei einem vorteilhaften Ausführungsbeispiel der erfindungsgemäßen Lösung bildet die Haube mit ihren Innenwänden ausgehend vom Strömungshomogenisierelement bis zur Haubenöffnung einen zylindrischen Kanal mit einem konstanten Innendurchmesser.

Alternativ dazu sieht eine andere Lösung vor, daß die Haube Innenwände aufweist, welche sich zumindest in einem Beschleunigungsabschnitt in Strömungsrichtung des Schutzgases verengen, um den Strömungsquerschnitt für das Schutzgas zu verkleinern und dadurch die Strömungsgeschwindigkeit desselben zu erhöhen.

Vorzugsweise ist der Beschleunigungsabschnitt zwischen der Austrittsöffnung des Pulverkanals und der Haubenöffnung angeordnet.

Um nach Verengung des Strömungsquerschnitts die Strömungsgeschwindigkeit des Schutzgases bis zur Haubenöffnung beizubehalten, entspricht vorzugsweise ein Strömungsquerschnitt der Haubenöffnung ungefähr dem engsten Strömungsquerschnitt des Beschleunigungsabschnitts.

Eine besonders günstige Lösung sieht vor, daß der Beschleunigungsabschnitt sich konisch in Strömungsrichtung des Schutzgases verengende Innenwände aufweist.

Um bereits durch die Form der Innenwände eine später zum Pulverstrahl symmetrische Strömung vorzugeben ist vorgesehen, daß die Innenwände koaxial zur Mittelachse des Pulverkornstrahls verlaufen.

Ein zur Mittelachse des Pulverkornstrahls radialsymmetrischer Schutzgasstrom läßt sich vorteilhaft dann erzeugen, wenn die Haube einen im wesentlichen radialsymmetrisch zur Mittelachse des Pulverkornstrahls ausgebildeten Kanal für das Schutzgas bildet.

Um eine Störung des Strömungsprofils des Schutzgases am Ort der Austrittsöffnung des Pulverkornkanals durch das austretende Beschleunigungsgas und den Pulverkornstrahl möglichst weitgehend zu eliminieren ist vorzugsweise vorgesehen, daß die Haube sich in Strömungsrichtung des Schutzgases stromabwärts über die Austrittsöffnung hinaus erstreckt, so daß die Haubenöffnung stromabwärts der Austrittsöffnung des Pulverkornkanals liegt.

Ein besonders zweckmäßiges Ausführungsbeispiel, bei welchem die Einmischung von Umgebungsluft in den Schutzgasstrom minimal ist, sieht vor, daß aus der Haubenöffnung ein Schutzgasstrom mit einem im wesentlichen turbulenzfreien Strömungsprofil austritt, welcher den Pulverkornstrahl umgibt.

Ein derartiges turbulenzfreies Strömungsprofil des Schutzgasstroms trägt wesentlich dazu bei, Einmischungen von Umgebungsluft in den Schutzgasstrom im Mantelbereich des Schutzgasstroms möglichst gering zu halten.

Besonders gut läßt sich bei der erfindungsgemäßen Lösung eine Einmischung von Umgebungsluft in den Schutzgasstrom dann verhindern, wenn der Schutzgasstrom aus der Haubenöffnung mit einem Drall bezüglich des Pulverkornstrahls austritt.

Der Drall im Schutzgasstrom ist dabei entweder bereits durch ein drallgebend ausgebildetes Strömungshomogenisierelement oder durch ein separates drallgebendes Element erzeugbar.

Hinsichtlich der Ausbildung des Pulverkornkanals selbst wurden im Zusammenhang mit der bisherigen Erläuterung der einzelnen Ausführungsbeispiele keine näheren Angaben gemacht. So sieht eine vorteilhafte Lösung vor, daß der Pulverkornkanal eine Länge aufweist, welche mindestens das 20fache eines Innendurchmessers des Pulverkornkanals beträgt.

Noch besser ist es, wenn die Länge des Pulverkornkanals mindestens das 50fache des Innendurchmessers desselben beträgt.

Die Erfindung betrifft ferner ein Verfahren gemäß dem Oberbegriff des Anspruchs 22.

Zur Lösung der eingangs genannten Aufgabe ist bei einem derartigen Verfahren erfindungsgemäß vorgesehen, daß die Austrittsöffnung des Pulverkornkanals in einem Abstand von der Schmelzstelle geführt wird, welcher maximal dem 300fachen mittleren Durchmesser der Pulverkörner entspricht, und daß die Pulverkörner im Pulverkornbeschleunigungskopf derart beschleunigt werden, daß sie auf dem Weg bis zur Schmelze im wesentlichen einer Geraden folgen.

Vorzugsweise wird dabei der Schutzgasstrom derart erzeugt, daß der Schutzgasstrom mit einem im wesentlichen turbulenzarmen oder turbulenzfreien Strömungsprofil den Pulverkornstrahl umschließend zur Schmelzstelle strömt, wobei die im Zusammenhang mit einem derartigen Schutzgasstrom bereits vorstehend genannten Vorteile eintreten.

Um sicherzustellen, daß das im Bereich der Haubenöffnung erzeugte Strömungsprofil im wesentlichen bis zur Schmelzstelle erhalten bleibt, ist vorzugsweise vorgesehen, daß die Haube in einem derartigen Abstand von der Schmelzstelle geführt wird, daß der Abstand maximal dem zweifachen Innendurchmesser der Haubenöffnung entspricht.

Andererseits sollte die Haubenöffnung auch aus räumlichen Gründen nicht zu nahe der Schmelzstelle geführt werden, um geometrische Behinderungen beim Schmelzvorgang zu vermeiden. Aus diesem Grund ist vorzugsweise vorgesehen, daß die Haubenöffnung in einem Abstand von der Schmelzstelle geführt wird, welcher mindestens einem Innendurchmesser der Haubenöffnung entspricht.

Eine weitere vorteilhafte Bedingung des erfindungsgemäßen Verfahrens sieht vor, daß die Austrittsöffnung des Pulverkornkanals in einem Abstand von der Schmelzstelle geführt wird, welcher mindestens dem 50fachen mittleren Durchmesser der Pulverkörner entspricht. Die Führung der Austrittsöffnung in einem derartigen Abstand von der Schmelzstelle hat den Vorteil, daß sich das mit den Pulverkörnern aus der Austrittsöffnung austretende Beschleunigungsgas in dem umgebenden Schutzgasstrom soweit abgebremst hat, daß das Beschleunigungsgas nicht mehr störend auf die Schmelze im Bereich der Schmelzstelle einwirkt und somit die Ausbildung der Schweißnaht negativ beeinflußt.

Noch vorteilhafter ist es, wenn die Austrittsöffnung in einem Abstand von der Schmelzstelle geführt wird, welcher mindestens dem 100fachen mittleren Durchmesser der Pulverkörner entspricht.

Andererseits ist ein zu großer Abstand nicht vorteilhaft, da in diesem Fall entweder eine große Menge Beschleunigungsgas pro Zeiteinheit erforderlich ist oder ein sehr kleiner Innendurchmesser des Pulverkornkanals, um die Pulverkörner an der Austrittsöffnung auf eine ausreichend hohe Geschwindigkeit zu beschleunigen. Aus diesem Grund ist vorzugsweise vorgesehen, daß die Austrittsöffnung des Pulverkornkanals einen Abstand von der Schmelzstelle aufweist, welcher maximal dem 300fachen mittleren Durchmesser der Pulverkörner entspricht. Noch besser ist ein Abstand welcher maximal dem 200fachen mittleren Durchmesser der Pulverkörner entspricht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1 einen Längsschnitt durch ein erstes Ausführungsbeispiel eines erfindungsgemäßen Laserbearbeitungskopfes;

Fig. 2 einen Teilausschnitt durch eine erste Variante eines erfindungsgemäßen Strömungshomogenisierelements;

Fig. 3 einen Teilausschnitt durch eine zweite Variante eines erfindungsgemäßen Strömungshomogenisierelements;

Fig. 4 einen Schnitt ähnlich Fig. 1 durch ein zweites Ausführungsbeispiel eines erfindungsgemäßen Laserbearbeitungskopfes;

Fig. 5 einen Schnitt ähnlich Fig. 1 durch ein drittes Ausführungsbeispiel eines erfindungsgemäßen Laserbearbeitungskopfes;

Fig. 6 einen Schnitt ähnlich Fig. 1 durch ein viertes Ausführungsbeispiel eines erfindungsgemäßen Laserbearbeitungskopfes;

Fig. 7 einen Teilschnitt ähnlich Fig. 1 durch ein fünftes Ausführungsbeispiel eines erfindungsgemäßen Laserbearbeitungskopfes; und

Fig. 8 einen Schnitt durch ein drallerzeugendes Strömungshomogenisierelement gemäß dem fünften Ausführungsbeispiel.

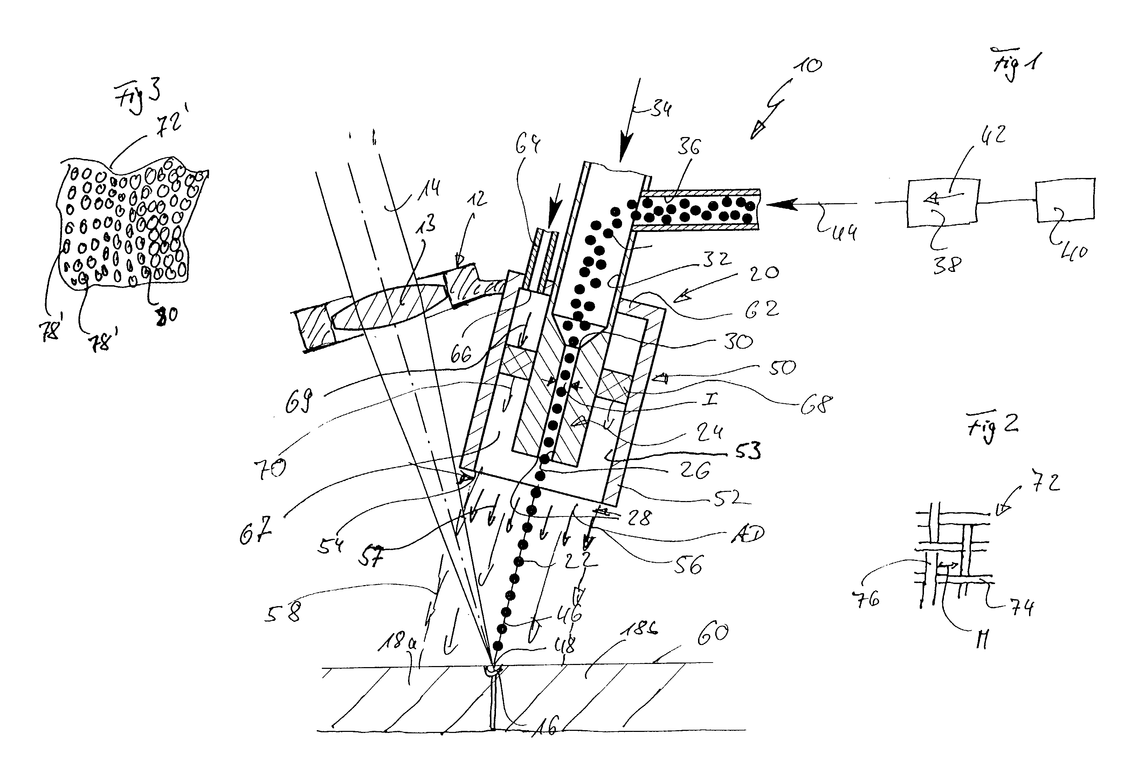

Ein Ausführungsbeispiel eines als Ganzes mit 10 bezeichneten Laserbearbeitungskopfes, dargestellt in Fig. 1, umfaßt eine Strahlführungsoptik 12 mit einer Fokussierungsoptik 13 zum Fokussieren eines Laserstrahls 14 auf eine Schmelzstelle 16 zum Erschmelzen von Material im Bereich der Schmelzstelle 16, wobei beispielsweise zwei Werkstücke 18a und 18b an der Schmelzstelle 16 miteinander zu verschweißen sind.

Zusätzlich zur Strahlführungsoptik 12 weist der Laserbearbeitungskopf 10 eine als Ganzes mit 20 bezeichnete Pulverzufuhreinrichtung auf, umfassend einen einen Pulverkornstrahl 22 erzeugenden Pulverkornbeschleunigungskopf 24, mit einem Pulverkornkanal 26, welcher sich von einer Austrittsöffnung 28 für den Pulverkornstrahl 22 durch den Pulverkornbeschleunigungskopf 24 hindurch bis zu einer Eintrittsöffnung 30 erstreckt, mit welcher der Pulverkornkanal 26 in eine Zumischkammer 32 des Pulverkornbeschleunigungskopfes 24 einmündet.

Der Zumischkammer 32 ist dabei auf einer der Eintrittsöffnung 30 gegenüberliegenden Seite ein Beschleunigungsgasstrom 34 zuführbar,- welcher die Zumischkammer 32 durchsetzt und dann über die Eintrittsöffnung 30 in den Pulverkornkanal 26 eintritt.

Zur Zumischung von Pulverkörnern 37 zu den Beschleunigungsgasstrom 34 in der Zumischkammer 32 mündet in dieser seitlich eine Pulverkornzufuhrleitung 36, über welche die Pulverkörner 37 vorzugsweise in Richtung quer zum Beschleunigungsgasstrom 34 in die Zumischkammer 32 gefördert werden, um in der Zumischkammer 32 vom Beschleunigungsgasstrom 24 erfaßt und im Pulverkornkanal 26 auf eine Endgeschwindigkeit beschleunigt zu werden, mit welcher die Pulverkörner 37 dann in Form des Pulverkornstrahls 22 aus der Austrittsöffnung 28 austreten.

Die Pulverkornzufuhrleitung 36 ist vorzugsweise mit einem Pulverkörnerreservoir 38 verbunden, aus welchem beispielsweise mittels eines von einer Fördergasquelle 40 erzeugten Fördergasstroms 42 ein Pulverkornstrom 44 zur Pulverkornzufuhrleitung 36 und dann durch diese in die Zumischkammer 32 gefördert wird.

Sowohl das Fördergas des Fördergasstroms 42 als auch das Beschleunigungsgas des Beschleunigungsgasstroms 34 umfassen für das Laserschweißverfahren inerte Gase.

Die Beschleunigung der Pulverkörner 37 in dem Pulverkornkanal 26 erfolgt vorzugsweise auf eine Geschwindigkeit in der Größenordnung von 100 m/sek.

Bei einer derartigen Geschwindigkeit ist es möglich, den Pulverkörnern 37 eine derartigen Impuls zu vermitteln, daß der Pulverkornstrahl 22 sich im wesentlichen längs einer eine Mittelachse des Pulverkornkanals bildenden Geraden 46 von der Austrittsöffnung 28 bis zur Schmelzstelle 16 ausbreitet, so daß mittels des Pulverkornbeschleunigungskopfes 24 die Pulverkörner 37 gezielt einer Schmelze 48 der Schmelzstelle 16 oder einem Fokus 15 des Laserstrahls 14 zuführbar sind.

Die maximale Geschwindigkeit, auf welche die Pulverkörner 37 im Pulverkornkanal 26 beschleunigt werden, liegt bei 300m/sek. Bei größeren Geschwindigkeiten besteht das Problem, daß das Auftreffen der Pulverkörner 37 in der Schmelze 48 mit einer derartigen Geschwindigkeit erfolgt, daß die Schmelze 48 negativ beeinflußt wird, das heißt erschmolzenes Material aus der Schmelze 48 herausspritzt.

Vorzugsweise ist zum Erreichen einer möglichst geringen Querabweichung des Pulverkornstrahls 22 von der Geraden 46 das Produkt

$$\rho \times r \times v^2$$

möglichst groß zu wählen, wobei v die Geschwindigkeit der Pulverkörner 37 an der Austrittsöffnung 28, r der mittlere Radius der Pulverkörner 37 und ρ die Dichte des Materials ist, aus welchem die Pulverkörner 37 hergestellt sind. Der Radius r ist allerdings insofern limitiert, daß dieser sinnvollerweise kleiner 0,8 mm noch besser 0,6 mm ist, da ansonsten in diesem Fall ebenfalls eine negative Beeinflussung der Schmelze 48 im Bereich der Schmelzstelle 16 durch einschlagende Pulverkörner 37 erfolgt.

Um die genannten Geschwindigkeiten v der Pulverkörner 37 an der Austrittsöffnung 38 zu erzielen, ist ein Innendurchmesser I des Pulverkornkanals 26 vorzugsweise so zu wählen, daß dieser maximal dem 10fachen mittleren Durchmesser D=2r der Pulverkörner 37 und mindestens dem 1,5fachen Durchmesser D der Pulverkörner 37 entspricht.

Der Abstand zwischen der Schmelzstelle 16 und der Austrittsöffnung 28 ist größer als der 50fache, noch besser größer als der 100fache mittlere Durchmesser D der Pulverkörner 37. Dies ist vorteilhaft, um sicherzustellen, daß das Zusammen mit den Pulverkörnern 37 aus der Austrittsöffnung 28 austretende Beschleunigungsgas des Beschleunigungsgasstroms 34 in der umgebenden Schutzgasatmosphäre abgebremst wird und nicht auf die Schmelze 48 der Schmelzstelle 16 einwirkt und somit im Bereich derselben keine starke Gasströmung, insbesondere keine turbulente Gasströmung, entstehen läßt.

Damit die Pulverkörner 37 im Pulverkornstrahl 22 der Geraden 46 mit unwesentlichen Abweichungen folgen, ist ferner der Pulverkornbeschleunigungskopf 24 so im Abstand von der Schmelzstelle 16 geführt, daß ein maximaler Abstand zwischen der Schmelzstelle 16 und der Austrittsöffnung 28 das 300fache des mittleren Durchmessers D des Pulverkorns, vorzugsweise das 200fache des Durchmessers D der Pulverkörner 37, beträgt.

Die vorstehend angegebenen Werte für den mittleren Radius r und den mittleren Durchmesser D der Pulverkörner 37 entsprechen den Mittelwerten des Durchmessers der Pulverkörner 37, wobei eine Streuung in den tatsächlichen Durchmessern D der Pulverkörner 37 vorzugsweise kleiner $\pm$ 30 % des mittleren Durchmessers, noch besser kleiner $\pm$ 20 % ist.

Der erfindungsgemäße Pulverkornbeschleunigungskopf 24 arbeitet beispielsweise bei Verwendung von Aluminium zur Herstellung der Pulverkörner 37 mit einem mittleren Durchmesser D im Bereich von 200 bis 400 μm.

Um die Laserschweißung ohne negative Beeinflussung durch die umgebende Atmosphäre durchführen zu können, ist der Pulverkornbeschleunigungskopf 24 vorzugsweise mit einer Schutzgaszuführung 50 versehen, welche eine den Pulverkornbeschleunigungskopf 24 umschließende Haube 52 umfaßt, die eine bezogen auf den Pulverkornstrahl 22 stromabwärts der Austrittsöffnung 28 liegende Haubenöffnung 54 aufweist, aus welcher ein Schutzgasstrom 56 austritt, welcher im wesentlichen symmetrisch zur Geraden 46 in Richtung der Schmelzstelle 16 strömt und dabei ein im wesentlichen zur Geraden 46 radialsymmetrisches Strömungsgeschwindigkeitsprofil 57 aufweist, wobei dieses Strömungsgeschwindigkeitsprofil des Schutzgasstroms 56 ferner im wesentlichen turbulenzfrei gestaltet ist, um zu verhindern, daß im Bereich eines Außenmantels 58 des Schutzgasstromes 56 eine starke Zumischung von der den Außenmantel 58 umgebenden Luft erfolgt.

Der Schutzgasstrom 56 erstreckt sich ferner bis zu einer Oberfläche 60 der Werkstücke und umschließt aufgrund seiner symmetrischen Ausbildung bezüglich der Gerade 46 die Schmelzstelle 16 ebenfalls im wesentlichen radial symmetrisch, so daß auch die Schmelze 48 gegen den Einfluß von Komponenten der den Schutzgasstrom 56 umgebenden Luft abgeschirmt ist. Bei einer erfindungsgemäßen idealen Abschirmung der Schmelzstelle 16 gegen Luft ist eine oxidfreie Laserschweißung im Bereich der Schmelzstelle 16 ohne Oxidation des Materials der Schmelze 48 möglich.

Zur Erzeugung eines derartigen Schutzgasstroms 56 erstreckt sich die Haube 52 bezogen auf den Pulverkornstrahl 22 stromaufwärts über die Austrittsöffnung 28 hinaus und umschließt dabei den Pulverkornbeschleunigungskopf 24, wobei die Haube 52 durch einen Haubendeckel 62 abgeschlossen ist, welchen der Pulverkornbeschleunigungskopf 24 durchdringt.

In den Haubendeckel 62 mündet ferner eine Zuleitung 64 für das Schutzgas, wobei eine Mündungsöffnung 66 der Zuleitung vorzugsweise der Haubenöffnung 54 gegenüberliegend angeordnet ist.

Im einfachsten Fall ist die Haube 52 mit kreiszylindrischen Innenwänden 53 versehen, welche koaxial zur Geraden 46 angeordnet sind und sich, vom Haubendeckel 62 bis zur Haubenöffnung 54 erstrecken, so daß für das in die Haube 52 eingetretene Schutzgas ein zur Geraden 46 radialsymmetrischer Kanal 67 entsteht.

Zwischen der Mündungsöffnung 66 und der Haubenöffnung 54 ist ferner noch ein Strömungshomogenisierelement 68 vorgesehen, welches zwischen der Austrittsöffnung 28 und der Mündungsöffnung 66 liegt und vom Schutzgas in Strömungsrichtung 69 durchströmt ist. Dieses Strömungshomogenisierelement 68 dient dabei dazu, das über die Mündungsöffnung 66 eintretende Schutzgas innerhalb der Haube 52, vorzugsweise über einen Strömungsquerschnitt des Kanals 67 homogen zu verteilen und bereits in der Haube 52 stromaufwärts der Mündungsöffnung 28 ein Strömungsprofil 70 zu erzeugen, welches radialsymmetrisch zur Geraden 46 ausgebildet ist, so daß bereits im Bereich der Austrittsöffnung 28 der Pulverkornstrahl 22 von einer Schutzgasströmung mit einem zur Gerade 46 symmetrischen und vorzugsweise in Azimutalrichtung homogenen Strömungsprofil 70 umgeben ist, mit welchem dann das Schutzgas aus der Haubenöffnung 54 unter Bildung des Schutzgasstroms 56 mit einem entsprechenden Strömungsprofil 57 austritt.

Vorzugsweise weist der Schutzgasstrom 56 im Bereich der Haubenöffnung 54 einen Außendurchmesser AD auf, welcher in der Größenordnung von 15 bis 30 mm liegt.

Ferner ist die Haube 52 mit der Haubenöffnung 54 in einem derartigen Abstand von der Schmelzstelle 16 geführt, daß dieser größer als der Durchmesser AD des Schutzgasstroms, jedoch vorzugsweise maximal dem 2fachen Durchmesser AD des Schutzgasstroms 56 im Bereich der Haubenöffnung 54 ist.

Das Strömungshomogenisierelement 68 ist vorzugsweise, wie in Fig. 2 dargestellt, aus einem engmaschigen Sieb 72 aus beispielsweise im rechten Winkel zueinander verlaufenden Drähten 74 und 76 gebildet, wobei eine Maschenweite M Öffnungen 78 ungefähr in der Größenordnung von kleiner 0,2 mm ergibt.

Wird ein derartiges Sieb 72 von dem über die Mündungsöffnung 66 eintretenden Schutzgas durchströmt, so entsteht unmittelbar im Bereich des Siebes 72 eine feinturbulente Strömung, welche sich dann nach Beruhigung zu einem im wesentlichen in azimutaler Richtung um die Gerade 46 homogenen Strömungsprofil wandelt.

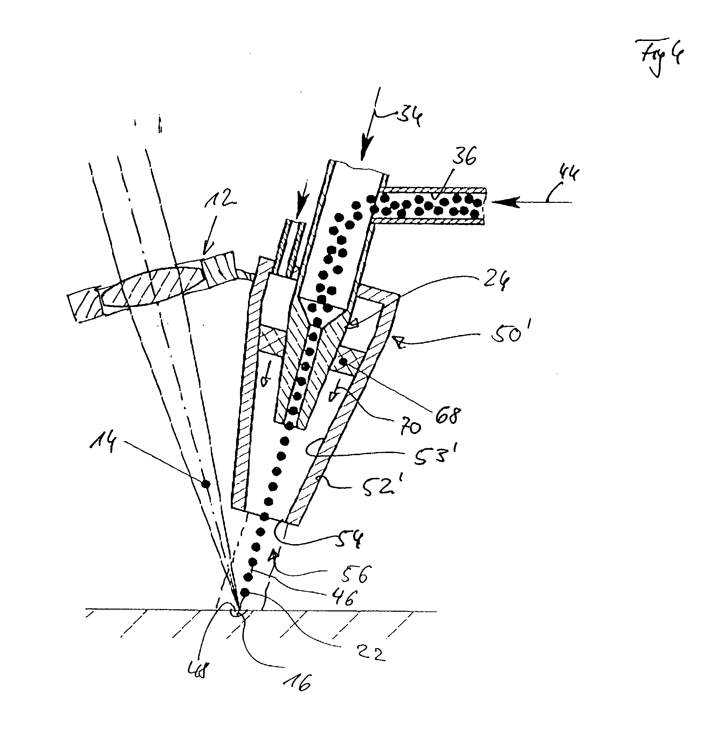

Alternativ zum Sieb 72, dargestellt in Fig. 2, ist es ebenfalls möglich, wie in Fig. 3 dargestellt, das Strömungshomogeniesierungselement 68 aus einer Platte 80 mit einer Vielzahl von in dieser vorgesehenen Durchbrüchen 78' herzustellen. Auch im Bereich der Durchbrüche entstehen eine feinturbulente Strömung, die sich dann nach Beruhigung zu dem homogenen Strömungsprofil 70 wandelt.

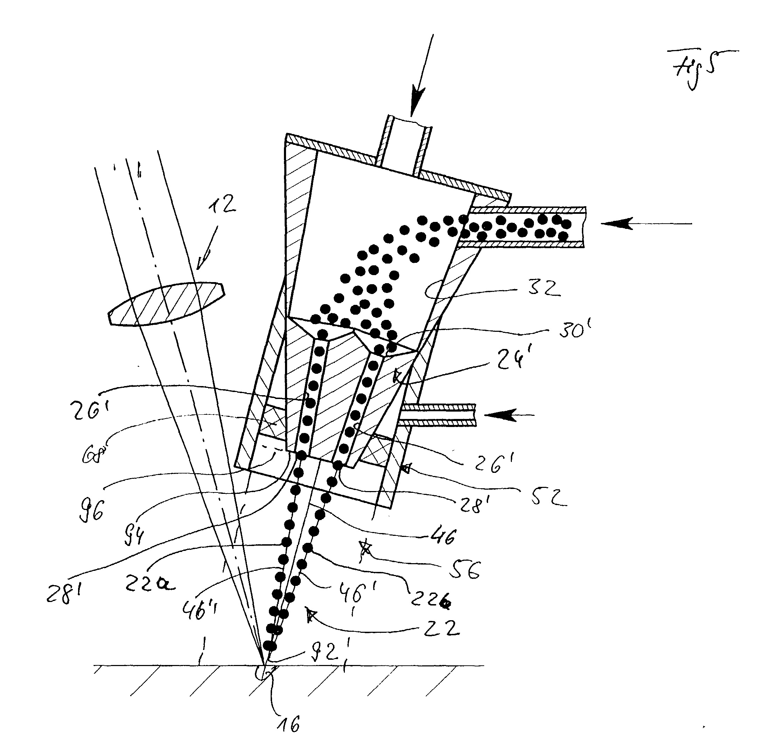

Bei einem zweiten Ausführungsbeispiel der erfindungsgemäßen Lösung, dargestellt in Fig. 4, sind diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen wird.

Im Gegensatz zum ersten Ausführungsbeispiel hat die Haube 52' keine zylindrische Innenwand 53, sondern eine sich konisch zur Mündungsöffnung 54 hin verengende. Innenwand 53', so daß der von dem Strömungshomogenisierelement 68 kommende Schutzgasstrom mit dem Strömungsprofil 70 zur Haubenöffnung 54 hin eine Verengung des Strömungsquerschnitts im Kanal 67 und somit ein Beschleunigung erfährt und folglich aus der Haubenöffnung 54 mit erhöhter Geschwindigkeit gegenüber der Geschwindigkeit, mit welcher das Strömungshomogenisierelement 68 passiert wird, ausströmt.

Dadurch besteht die Möglichkeit, mit einem geringeren Gasdurchsatz zur Erzeugung des Schutzgasstroms 56 zu arbeiten, wobei der Schutzgasstrom durch die konische Verengung der Innenwand 53' der Haube 52' eine zusätzliche Homogenisierung erfährt.

Im übrigen ist der Schutzgasstrom 56 nach wie vor radial symmetrisch zur Geraden 46, längs welcher sich der Pulverkornstrahl 22 ausbreitet angeordnet und beaufschlagt somit auch die Schmelzstelle 16 symmetrisch zur Geraden 46.

Bei einem dritten Ausführungsbeispiel, dargestellt in Fig. 5, ist der Pulverkornbeschleunigungskopf 24' so ausgebildet, daß er symmetrisch zu der eine Symmetrieachse bildenden Geraden 46 mehrere Pulverkornkanäle 26' aufweist, welche alle im selben Winkel zur Symmetrieachse 46 geneigt sind und sich alle längs Geraden 46' erstrecken, so daß die durch diese erzeugbaren Pulverkornteilstrahlen 22a, b sich im wesentlichen unmittelbar im Bereich der Schmelzstelle 16 schneiden, wobei in einem Schnittpunkt 92 der Geraden 46' diese auch die Symmetrieachse 46 schneiden.

Die Symmetrieachse 46 stellt vorzugsweise eine der Zahl der Pulverkornkanäle 26' entsprechende mehrzählige Symmetrieachse dar.

Sämtliche Pulverkornkanäle 26' münden mit ihren Eintrittsöffnungen 30 in die gemeinsame Zumischkammer 32, welche wie bereits im Zusammenhang mit dem ersten Ausführungsbeispiel beschrieben ausgebildet ist.

Ferner liegen auch sämtliche Austrittsöffnungen 28' der Pulverkornkanäle 26' vorzugsweise auf einer Stirnseite 94 des Pulverkornbeschleunigungskopfes und dabei insbesondere in einer gemeinsamen Ebene 96, die senkrecht zur Symmetrieachse 46 verläuft.

In gleicher Weise wie beim ersten Ausführungsbeispiel umschließt die Haube 52 den Pulverkornbeschleunigungskopf 24 und dient zur Erzeugung des Schutzgasstroms 56 in der bereits im Zusammenhang mit dem ersten Ausführungsbeispiel beschriebenen Art und Weise.

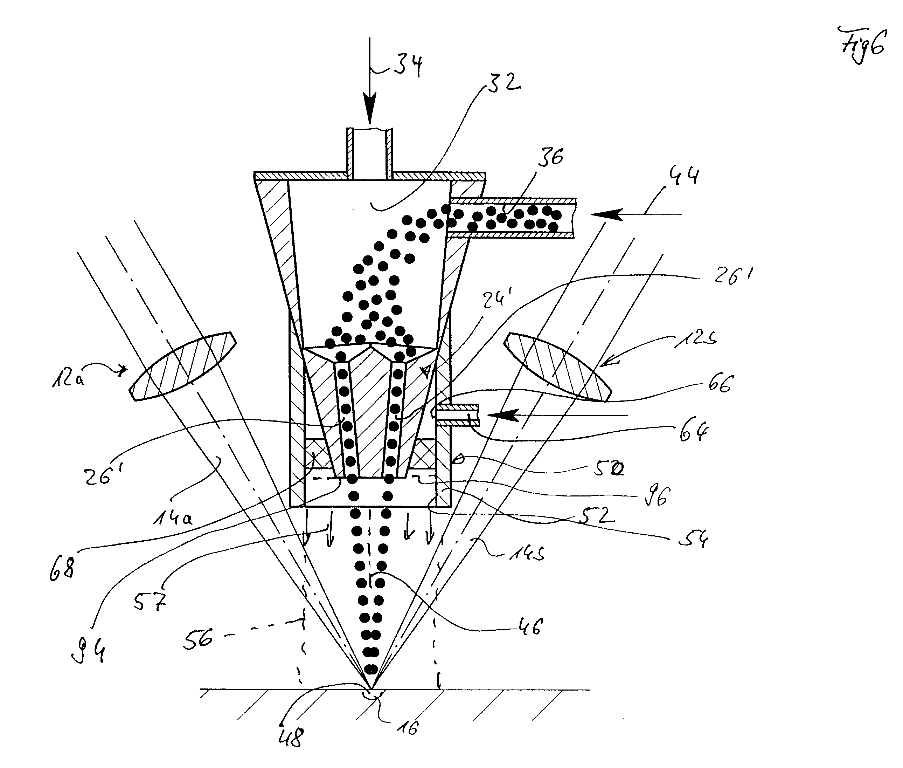

Bei einem vierten Ausführungsbeispiel einer erfindungsgemäßen Lösung, dargestellt in Fig. 6, ist der Pulverkornbeschleunigungskopf 24' und die Schutzgaszuführung in gleicher Weise ausgebildet wie beim dritten Ausführungsbeispiel, so daß auf die voranstehenden Ausführungen vollinhaltlich Bezug genommen wird.

Allerdings wird die Schmelzstelle 16 von zwei von gegenüberliegenden Seiten der Haube 52 kommenden Laserstrahlen 14a und 14b aufgeheizt.

Im übrigen sind alle anderen Teile des vierten Ausführungsbeispiels mit denselben Bezugszeichen versehen wie entsprechende Teile der vorangehenden Ausführungsbeispiele, so daß hinsichtlich deren Beschreibung vollinhaltlich auf die Ausführungen zu den voranstehenden Ausführungsbeispielen Bezug genommen wird.

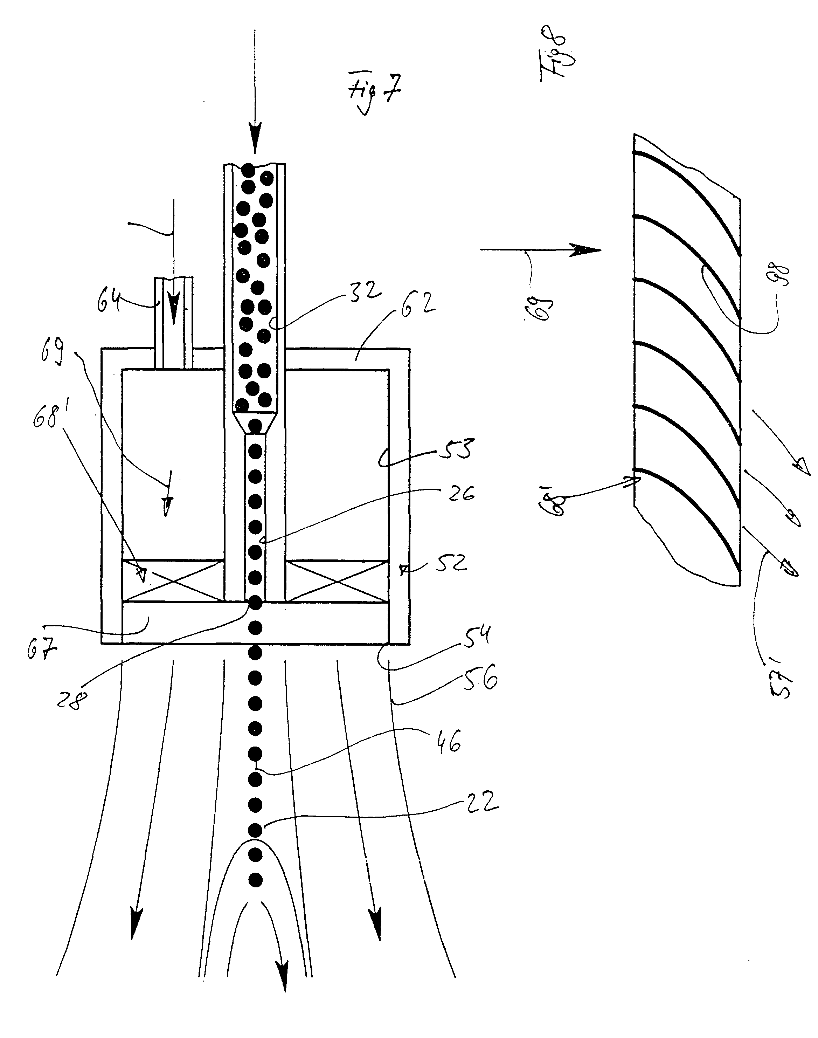

Bei einem fünften Ausführungsbeispiel eines erfindungsgemäßen Laserbearbeitungskopfes, dargestellt in Fig. 7, ist das Strömungshomogenisierelement 68' ungefähr in Höhe der Austrittsöffnung 28 des Pulverkornkanals 26 in der Haube 52 angeordnet und in diesem Fall nicht als Sieb ausgebildet, sondern, wie in Fig. 8 dargestellt, als drallerzeugendes Element, welches das in Strömungsrichtung 69 in der Haube 52 strömende Schutzgas mittels einer Vielzahl von Leitschaufeln 98 umlenkt und ein Strömungsprofil 57' mit einem Drall bezüglich der Mittelachse 46 des Pulverkornstrahls 22 erzeugt, so daß der Schutzgasstrom 56, welcher aus der Haubenöffnung 54 austritt, radialsymmetrisch um die Mittelachse 46 verläuft, jedoch mit einem Drall bezüglich derselben.

Darüber hinaus dient das Strömungshomogenisierelement 68' nach wie vor zur Homogenisierung des in Strömungsrichtung 69 durch dieses strömende Schutzgas, so daß der Schutzgasstrom 56 im übrigen mit einem zur Mittelachse 46 symmetrischen Strömungsprofil 57' versehen ist.

Ein derartiges mit einem Drall versehenes Strömungsprofil 57' hat den Vorteil, daß dadurch die Einmischung von Außenluft in den Schutzgasstrom besonders vorteilhaft unterdrückt werden kann.

Im übrigen ist das fünfte Ausführungsbeispiel gemäß Fig. 7 und 8 in gleicher Weise ausgebildet wie das erste Ausführungsbeispiel, identische Elemente mit denselben Bezugszeichen versehen sind und somit im übrigen hinsichtlich der detaillierten Beschreibung des fünften Ausführungsbeispiels auf die Ausführungen zum ersten Ausführungsbeispiel vollinhaltlich Bezug genommen wird.

**Patentansprüche**

1.    Laserbearbeitungskopf umfassend eine Strahlführungsoptik zum Fokussieren eines Laserstrahls (14) auf eine Schmelzstelle (16), eine Pulverzufuhreinrichtung (20) mit einem Puiverkornbeschleunigungskopf (24), in welchem in einem Pulverkornkanal (26) Pulverkörner (37) mit einem Beschleunigungsgas beschleunigbar sind, so daß ein aus einer Austrittsöffnung (28) des Pulverkorkanals (26) austretender Pulverkornstrahl (22) sich zu der Schmelzstelle (16) hin ausbreitet, und eine Schutzgaszuführung (50) mit einer Haube (52), welche die Austrittsöffnung (28) des Pulverkornkanals (26) umgibt, wobei Schutzgas über eine Mündungsöffnung (66) in die Haube (52) eintritt, ein in der Haube (52) angeordnetes Strömungshomogenisierelement (68) durchströmt, welches bezogen auf die Strömungsrichtung (69) des Schutzgases stromabwärts der Mündungsöffnung (66) und stromaufwärts der Austrittsöffnung (28) des Pulverkornkanals (26) angeordnet ist, und von der Haube (52) in Richtung der Schmelzstelle (16) geführt ist, und wobei über eine der Schmelzstelle (16) zugewandt liegende Haubenöffnung (54) das Schutzgas als den Pulverkornstrahl (22) umgebender Schutzgasstrom (56) austritt,
**dadurch gekennzeichnet, daß** ein Innendurchmesser (I) des Pulverkornkanals (26) maximal das 10fache eines mittleren Pulverkorndurchmessers (D) beträgt, und daß die den Pulverkornbeschleunigungskopf (24) verlassenden Pulverkörner (37) im Pulverkornstrahl (22) im wesentlichen einer Geraden (46) folgen.

**2.** Laserbearbeitungskopf nach Anspruch 1, **dadurch gekennzeichnet, daß** der Innendurchmesser (I) des Pulverkornkanals (26) mindestens das 1,5fache eines maximalen Pulverkorndurchmessers beträgt.

**3.** Laserbearbeitungskopf nach einem der voranstehenden Ansprüche, **dadurch gekennzeichnet, daß** der Pulverkornstrahl (22) durch mindestens zwei um die Mittelachse (46) des Pulverkornstrahls (22) herum angeordnete Pulverkornteilstrahlen (22a, 22b) gebildet ist.

**4.** Laserbearbeitungskopf nach einem der voranstehenden Ansprüche, **dadurch gekennzeichnet, daß** die Pulverzufuhreinrichtung eine unmittelbar stromaufwärts des Pulverkornkanals (26) angeordnete und in diesen einmündende Zumischkammer (32) aufweist, in welche pulverfreies, Beschleunigungsgas einströmt und welcher die Pulverkörner (37) durch eine Pulverkörnerfördereinrichtung (38, 40) zuführbar sind.

**5.** Laserbearbeitungskopf nach Anspruch 4, **dadurch gekennzeichnet, daß** die Pulverkörner (37) der Zumischkammer (32) mit einem Fördergas vermischt zuführbar sind.

**6.** Laserbearbeitungskopf nach einem der voranstehenden Ansprüche, **dadurch gekennzeichnet, daß** das Strömungshomogenisierelement (68) eine Vielzahl von Feinturbulenzen erzeugende Öffnungen (78) aufweist.

**7.** Laserbearbeitungskopf nach Anspruch 6, **dadurch gekennzeichnet, daß** das Strömungshomogenisierelement (68) als Sieb mit einer Vielzahl kleiner Öffnungen ausgebildet ist.

**8.** Laserbearbeitungskopf nach einem der voranstehenden Ansprüche, **dadurch gekennzeichnet, daß** das Strömungshomogenisierelement (68) in einem Abstand von der Haubenöffnung (54) angeordnet ist, welcher mindestens das 20fache eines Innendurchmessers (I) des Pulverkornkanals (26) beträgt.

**9.** Laserbearbeitungskopf nach einem der voranstehenden Ansprüche, **dadurch gekennzeichnet, daß** das Strömungshomogenisierelement (68) ungefähr in Höhe der Austrittsöffnung (28) des Pulverkornkanals (26) oder bezogen auf die Strömungsrichtung (69) des Schutzgases stromaufwärts der Austrittsöffnung (28) angeordnet ist.

**10.** Laserbearbeitungskopf nach einem der voranstehenden Ansprüche, **dadurch gekennzeichnet, daß** das Strömungshomogenisierelement (68) zusammen mit der Haube (52) eine Strömung mit einem Strömungsprofil (70) erzeugt, welche bei Erreichen der Haubenöffnung (54) einen Schutzgasstrom (56) ergibt, welcher ein in Azimutalrichtung um eine Mittelachse (46) des Pulverkornstrahls (22) herum im wesentlichen homogenes Strömungsprofil (57) aufweist.

**11.** Laserbearbeitungskopf nach Anspruch 10, **dadurch gekennzeichnet, daß** der Schutzgasstrom (56) ein zur Mittelachse (46) des Pulverkornstrahls (22) symmetrisches Strömungsprofil (57) aufweist.

**12.** Laserbearbeitungskopf nach einem der voranstehenden Ansprüche, **dadurch gekennzeichnet, daß** die Haube (52) mit ihren Innenwänden (53) ausgehend von dem Strömungshomogenisierelement (68) bis zur Haubenöffnung (54) einen zylindrischen Kanal (67) mit einem konstanten Innendurchmesser bildet.

**13.** Laserbearbeitungskopf nach einem der Ansprüche 1 bis 11, **dadurch gekennzeichnet, daß** die Haube (52) Innenwände (53') aufweist, welche sich zumindest in einem Beschleunigungsabschnitt (55) in Strömungsrichtung (69) des Schutzgases verengen.

**14.** Laserbearbeitungskopf nach Anspruch 13, **dadurch gekennzeichnet, daß** der Beschleunigungsabschnitt (55) zwischen der Austrittsöffnung (28) des Pulverkornkanals (26) und der Haubenöffnung (54) angeordnet ist.

**15.** Laserbearbeitungskopf nach Anspruch 13 oder 14, **dadurch gekennzeichnet, daß** ein Strömungsquerschnitt der Haubenöffnung (54) ungefähr dem engsten Strömungsquerschnitt des Beschleunigungsabschnitts (55) entspricht.

**16.** Laserbearbeitungskopf nach einem der Ansprüche 13 bis 15, **dadurch gekennzeichnet, daß** der Beschleunigungsabschnitt (55) sich konisch in Strömungsrichtung (69) des Schutzgases verengende Innenwände (53') aufweist.

**17.** Laserbearbeitungskopf nach einem der Ansprüche 12 bis 16, **dadurch gekennzeichnet, daß** die Innenwände (53, 53') der Haube (52) koaxial zur Mittelachse (46) des Pulverkornstrahls (22) verlaufen.

**18.** Laserbearbeitungskopf nach einem der Ansprüche 12 bis 17, **dadurch gekennzeichnet, daß** die Haube (52) einen im wesentlichen radialsymmetrisch zur Mittelachse (46) des Pulverkornstrahls (22) ausgebildeten Kanal (67) für das Schutzgas bildet.

**19.** Laserbearbeitungskopf nach einem der voranstehenden Ansprüche, **dadurch gekennzeichnet, daß** die Haube (52) sich in Strömungsrichtung (69) des Schutzgases stromabwärts über die Austrittsöffnung (28) hinaus erstreckt.

20. Laserbearbeitungskopf nach einem der Ansprüche 10 bis 19, **dadurch gekennzeichnet, daß** der aus der Haubenöffnung (54) austretende Schutzgasstrom (56) ein im wesentlichen turbulenzfreies Strömungsprofil (57) aufweist.

21. Laserbearbeitungskopf nach einem der voranstehenden Ansprüche, **dadurch gekennzeichnet, daß** der Schutzgasstrom (56) aus der Haubenöffnung (54) mit einem Drall bezüglich des Pulverkornstrahls (22) austritt.

22. Verfahren zum Laserbearbeiten, insbesondere Laserschweißen, bei welchem einer mittels eines auf eine Schmelzstelle (16) einwirkenden Laserstrahls (14) erzeugten Schmelze in einem Pulverkornkanal (26) mittels eines Beschleunigungsgases beschleunigte Pulverkörner (37) in Form eines von einer Austrittsöffnung (28) des Pulverkornkanals (26) ausgehenden Pulverkornstrahls (26) zugeführt werden und bei welchem der Zutritt von Gasen aus der Umgebung der Schmelzstelle (16) durch einen mittels einer Haube (52) erzeugten und den Pulverkornstrahl (22) umgebenden Schutzgasstrom (56) reduziert wird, welcher von der Haube (52) und einem darin angeordneten Strömungshomogenisierelement (68) als um eine Mittelachse (46) des Pulverkornstrahls (22) in azimutaler Richtung ein im wesentlichen homogenes Strömungsprofil aufweisender Schutzgasstrom (56) erzeugt wird und der Schutzgasstrom mit einem derartigen Strömungsprofil von der Haubenöffnung (54) ausgehend zur Schmelzstelle (16) strömt, **dadurch gekennzeichnet, daß** die Austrittsöffnung (28) des Pulverkornkanals (26) in einem Abstand von der Schmelzstelle (16) geführt wird, welcher maximal dem 300fachen mittleren Durchmesser der Pulverkörner (37) entspricht, und daß die Pulverkörner (37) im Pulverkornbeschleunigungskopf (24) derart beschleunigt werden, daß sie auf dem Weg bis zur Schmelze (48) im wesentlichen einer Geraden (46) folgen.

23. Verfahren nach Anspruch 22, **dadurch gekennzeichnet, daß** der Schutzgasstrom (56) mit einem im wesentlichen turbulenzarmen oder turbulenzfreien Strömungsprofil den Pulverkornstrahl (22) umschließend zur Schmelzstelle (16) strömt.

24. Verfahren nach Anspruch 22 oder 23, **dadurch gekennzeichnet, daß** die Haube (52) in einem derartigen Abstand von der Schmelzstelle (16) geführt wird, daß der Abstand maximal dem 2fachen Innendurchmesser der Haubenöffnung (54) entspricht.

25. Verfahren nach einem der Ansprüche 22 bis 24, **dadurch gekennzeichnet, daß** die Haubenöffnung (54) in einem Abstand von der Schmelzstelle (16) geführt wird, welcher mindestens einem Innendurchmesser der Haubenöffnung (54) entspricht.

26. Verfahren nach einem der Ansprüche 22 bis 25, **dadurch gekennzeichnet, daß** die Austrittsöffnung (28) des Pulverkornkanals (26) in einem Abstand von der Schmelzstelle (16) geführt wird, welcher mindestens dem 50fachen mittleren Durchmesser (D) der Pulverkörner (37) entspricht.

## Claims

1. Laser machining head comprising a beam guiding optical system for focussing a laser beam (14) onto a fusion point (16), a powder feed device (20) with a powder particle acceleration head (24), in which in a powder particle channel (26) powder particles (37) can be accelerated by means of an acceleration gas so that a powder particle beam (22) exiting from an outlet opening (28) of the powder particle channel (26) propagates in the direction of the fusion point (16), and a shielding gas supply (50) having a hood (52), which surrounds the outlet opening (28) of the powder particle channel (26), wherein shielding gas passes through a port (66) into the hood (52), flows through a flow homogenizing element (68), which is disposed in the hood (52) and which is disposed in relation to the flow direction (69) of the shielding gas downstream of the port (66) and upstream of the outlet opening (28) of the powder particle channel (26), and is guided by the hood (52) in the direction of the fusion point (16), and wherein via a hood opening (54) situated facing the fusion point (16) the shielding gas exits in the form of a shielding gas stream (56) surrounding the powder particle beam (22),
**characterized in that** an inside diameter (I) of the powder particle channel (26) is at most 10 times an average powder particle diameter (D), and that the powder particles (37) leaving the powder particle acceleration head (24) follow a substantially straight line (46) in the powder particle beam (22).

2. Laser machining head according to claim 1, **characterized in that** the inside diameter (I) of the powder particle channel (26) is at least 1.5 times a maximum powder particle diameter.

3. Laser machining head according to one of the preceding claims, **characterized in that** the powder particle beam (22) is formed by at least two powder particle partial beams (22a, 22b) disposed around the centre line (46) of the powder particle beam (22).

4. Laser machining head according to one of the preceding claims, **characterized in that** the powder feed device comprises an admixing chamber (32), which is disposed immediately upstream of and opens into the powder particle channel (26) and into which powder-free acceleration gas flows and to which the powder particles are feedable by means of a powder particle conveying device (38, 40).

5. Laser machining head according to claim 4, **characterized in that** the powder particles (37) are feedable, mixed with a conveying gas, to the admixing chamber (32).

6. Laser machining head according to one of the preceding claims, **characterized in that** the flow homogenizing element (68) comprises a plurality of openings (78), which generate fine turbulences.

7. Laser machining head according to claim 6, **characterized in that** the flow homogenizing element (68) is designed as a sieve having a plurality of small openings.

8. Laser machining head according to one of the preceding claims, **characterized in that** the flow homogenizing element (68) is disposed at a distance from the hood opening (54), which distance is at least 20 times an inside diameter (I) of the powder particle channel (26).

9. Laser machining head according to one of the preceding claims, **characterized in that** the flow homogenizing element 968) is disposed roughly at the level of the outlet opening (28) of the powder particle channel (26) or, in relation to the flow direction (69) of the shielding gas, upstream of the outlet opening (28).

10. Laser machining head according to one of the preceding claims, **characterized in that** the flow homogenizing element (68) together with the hood (52) generates a flow with a flow profile (70), which flow, on reaching the hood opening (54), produces a shielding gas stream (56) with a flow profile (57, which is substantially homogeneous in azimuthal direction around a centre line (46) of the powder particle beam (22).

11. Laser machining head according to claim 10, **characterized in that** the shielding gas stream (56) has a flow profile (57), which is symmetrical relative to the centre line (46) of the powder particle beam (22).

12. Laser machining head according to one of the preceding claims, **characterized in that** the hood (52) with its inner walls (53) forms a cylindrical channel (67) with a constant inside diameter from the flow homogenizing element (68) to the hood opening (54).

13. Laser machining head according to one of claims 1 to 11, **characterized in that** the hood (52) has inner walls (53'), which at least in an acceleration portion (55) narrow in flow direction (69) of the shielding gas.

14. Laser machining head according to claim 13, **characterized in that** the acceleration portion (55) is disposed between the outlet opening (28) of the powder particle channel (26) and the hood opening (54).

15. Laser machining head according to claim 13 or 14, **characterized in that** a flow cross section of the hood opening (54) corresponds approximately to the narrowest flow cross section of the acceleration portion (55).

16. Laser machining head according to one of claims 13 to 15, **characterized in that** the acceleration portion (55) has inner walls (53'), which narrow conically in flow direction (69) of the shielding gas.

17. Laser machining head according to one of claims 12 to 16, **characterized in that** the inner walls (53, 53') of the hood (52) extend coaxially with the centre line (46) of the powder particle beam (22).

18. Laser machining head according to one of claims 12 to 17, **characterized in that** the hood (52) forms for the shielding gas a channel (67), which is constructed substantially radially symmetrically relative to the centre line (46) of the powder particle beam (22).

19. Laser machining head according to one of the preceding claims, **characterized in that** the hood (52) extends in flow direction (69) of the shielding gas downstream beyond the outlet opening (28).

20. Laser machining head according to one of claims 10 to 19, **characterized in that** the shielding gas stream (56) exiting from the hood opening (54) has a substantially non-turbulent flow profile (57).

21. Laser machining head according to one of the preceding claims, **characterized in that** the shielding gas stream (56) exits from the hood opening (54) with a swirl relative to the powder particle beam (22).

22. Laser machining method, in particular a laser welding method, whereby powder particles (37) accelerated by means of an acceleration gas in a powder particle channel (26) are fed in the form of a powder particle beam (22) exiting from an outlet opening (28) of the powder particle channel (26) to a melt produced by means of a laser beam (14) acting upon a fusion point (16) and whereby the admission of gases from the area surrounding the fusion point (16) is reduced by means of a shielding gas stream (56), which is generated by means of a hood (52) and surrounds the powder particle beam (22) and which is generated by the hood (52) and a flow homogenizing element (68) disposed therein in the form of shielding gas stream (56) with a flow profile, which is substantially homogeneous in azimuthal direction around a centre line (46) of the powder particle beam (22), and the shielding gas stream flows with such a flow profile from the hood opening (54) to the fusion point (16), **characterized in that** the outlet opening (28) of the powder particle channel (26) is located at a distance from the fusion point (16) corresponding to at most 300 times the average diameter of the powder particles (37), and that the powder particles (37) are accelerated in the powder particle acceleration head (24) in such a way that en route to the melt (48) they follow a substantially straight line (46).

23. Method according to claim 22, **characterized in that** the shielding gas stream (56) surrounding the powder particle beam (22) flows with a substantially low-turbulence or non-turbulent flow profile to the fusion point (16).

24. Method according to claim 22 or 23, **characterized in that** the hood (52) is located at such a distance from the fusion point (16) that the distance corresponds to at most twice the inside diameter of the hood opening (54).

25. Method according to one of claims 22 to 24, **characterized in that** the hood opening (54) is located at a distance from the fusion point (16) corresponding to at least an inside diameter of the hood opening (54).

26. Method according to one of claims 22 to 25, **characterized in that** the outlet opening (28) of the powder particle channel (26) is located at a distance from the fusion point (16) corresponding to at least 50 times the average diameter (D) of the powder particles (37).

**Revendications**

1. Tête de traitement laser comprenant un système de guidage de faisceau pour focaliser un faisceau laser (14) sur une zone de fusion (16), un dispositif d'apport de poudre (20) comportant une tête d'accélération de grains de poudre (24) dans laquelle des grains de poudre (37) peuvent être accélérés dans un canal de grains de poudre (26) au moyen d'un gaz d'accélération, de sorte qu'un jet de grains de poudre (22), sortant par une ouverture de sortie (28) du canal de grains de poudre (26), se propage jusqu'à la zone de fusion (16), et un dispositif d'apport de gaz protecteur (50) comportant un capuchon (52) qui entoure l'ouverture de sortie (28) du canal de grains de poudre (26), dans laquelle le gaz protecteur pénètre dans le capuchon (52) par l'intermédiaire d'une ouverture d'embouchure (66), traverse un élément (68) d'homogénéisation de l'écoulement disposé, dans le capuchon (52), en aval de l'ouverture d'embouchure (66) et en amont de l'ouverture de sortie (28) du canal de grains de poudre (26) par rapport à la direction d'écoulement (69) du gaz protecteur, et est guidé par le capuchon (52) en direction de la zone de fusion (16), et dans laquelle le gaz protecteur sort par l'intermédiaire d'une ouverture (54) du capuchon, tournée vers la zone de fusion (16), pour former un courant de gaz protecteur (56) entourant le jet de grains de poudre (22), **caractérisée en ce qu'**un diamètre intérieur (I) du canal de grains de poudre (26) est au plus égal à 10 fois un diamètre moyen (D) des grains de poudre, et **en ce que** les grains de poudre (37), qui quittent la tête d'accélération de grains de poudre (24), dans le jet de grains de poudre (22) suivent essentiellement une droite (46).

2. Tête de traitement laser selon la revendication 1, **caractérisée en ce que** le diamètre intérieur (I) du canal de grains de poudre (26) est au moins égal à 1,5 fois un diamètre maximum des grains de poudre.

3. Tête de traitement laser selon l'une des revendications précédentes, **caractérisée en ce que** le jet de grains de poudre (22) est formé par au moins deux jets partiels de grains de poudre(22a, 22b), disposés autour de l'axe central (26) du jet des grains de poudre (22).

4. Tête de traitement laser selon l'une des revendications précédentes, **caractérisée en ce que** le dispositif d'apport de poudre comporte une chambre de mélange (32), disposée directement en amont du canal de grains de poudre (26) et débouchant dans ce canal, dans laquelle pénètre un gaz d'accélération dépourvu de poudre, et à laquelle les grains de poudre (37) peuvent être amenés par un dispositif (38, 40) d'entraînement des grains de poudre.

5. Tête de traitement laser selon la revendication 4, **caractérisée en ce que** les grains de poudre (37) peuvent être envoyés à la chambre de mélange (32) en étant mélangés à un gaz d'entraînement.

**6.** Tête de traitement laser selon l'une des revendications précédentes, **caractérisée en ce que** l'élément (68) d'homogénéisation de l'écoulement comporte une multiplicité d'ouvertures (78) produisant de fines turbulences.

**7.** Tête de traitement laser selon la revendication 6, **caractérisée en ce que** l'élément (68) d'homogénéisation de l'écoulement est agencé sous la forme d'un tamis comportant une multiplicité de petites ouvertures.

**8.** Tête de traitement laser selon l'une des revendications précédentes, **caractérisée en ce que** l'élément (68) d'homogénéisation de l'écoulement est disposé à une distance de l'ouverture (54) du capuchon, qui est au moins égale à 20 fois un diamètre intérieur (I) du canal de grains de poudre (26).

**9.** Tête de traitement laser selon l'une des revendications précédentes, **caractérisée en ce que** l'élément (68) d'homogénéisation de l'écoulement est disposé approximativement à hauteur de l'ouverture de sortie (28) du canal de grains de poudre (26) ou est disposé, par rapport à la direction d'écoulement (69) du gaz protecteur, en amont de l'ouverture de sortie (28).

**10.** Tête de traitement laser selon l'une des revendications précédentes, **caractérisée en ce que** l'élément (68) d'homogénéisation de l'écoulement produit, conjointement avec le capuchon (52), un écoulement présentant un profil d'écoulement (70) qui fournit, lorsque l'ouverture (54) du capuchon est atteinte, un courant de gaz protecteur (56) possédant, dans la direction azimutale, un profil d'écoulement (57) sensiblement homogène autour d'un axe médian (46) du jet de grains de poudre (22).

**11.** Tête de traitement laser selon la revendication 10, **caractérisée en ce que** le courant de gaz protecteur (56) présente un profil d'écoulement symétrique par rapport à l'axe médian (46) du jet de grains de poudre (22).

**12.** Tête de traitement laser selon l'une des revendications précédentes, **caractérisée en ce que** le capuchon (52) forme, avec ses parois intérieures (53), depuis l'élément (68) d'homogénéisation de l'écoulement jusqu'à l'ouverture (54) du capuchon, un canal cylindrique (67) présentant un diamètre intérieur constant.

**13.** Tête de traitement laser selon l'une des revendications 1 à 11, **caractérisée en ce que** le capuchon (52) comporte des parois intérieures (53') qui, au moins dans une zone d'accélération (55), se rétrécissent dans la direction d'écoulement (69) du gaz protecteur.

**14.** Tête de traitement laser selon la revendication 13, **caractérisée en ce que** la zone d'accélération (55) est disposée entre l'ouverture de sortie (28) du canal de grains de poudre (26) et l'ouverture (54) du capuchon.

**15.** Tête de traitement laser selon la revendication 13 ou 14, **caractérisée en ce qu'**une section transversale d'écoulement de l'ouverture de capuchon (54) correspond approximativement à la section transversale d'écoulement la plus étroite de la zone d'accélération (55).

**16.** Tête de traitement laser selon l'une des revendications 13 à 15, **caractérisée en ce que** la zone d'accélération (55) possède des parois intérieures (53') qui se rétrécissent coniquement dans la direction d'écoulement (69) du gaz protecteur.

**17.** Tête de traitement laser selon l'une des revendications 12 à 16, **caractérisée en ce que** les parois intérieures (53, 53') du capuchon (52) s'étendent coaxialement à l'axe médian (46) du jet de grains de poudre (22).

**18.** Tête de traitement laser selon l'une des revendications 12 à 17 **caractérisée en ce que** le capuchon (52) forme pour le gaz protecteur un canal (57) agencé avec une symétrie sensiblement radiale par rapport à l'axe médian (46) du jet de grains de poudre (22).

**19.** Tête de traitement laser selon l'une des revendications précédentes, **caractérisée en ce que** le capuchon (52) s'étend en aval, dans la direction d'écoulement (69) du gaz protecteur, au-delà de l'ouverture de sortie (28).

**20.** Tête de traitement laser selon l'une des revendications 10 à 19, **caractérisée en ce que** le courant de gaz protecteur (56) sortant de l'ouverture du capuchon (52) présente un profil d'écoulement (57) sensiblement sans turbulences.

**21.** Tête de traitement laser selon l'une des revendications précédentes, **caractérisée en ce que** le courant de gaz protecteur (56) sort par l'ouverture (54) du capuchon en formant un tourbillon par rapport au jet de grains de poudre (22).

**22.** Procédé de traitement laser, notamment de soudage laser, dans lequel on apporte, à une masse fondue produite au moyen d'un faisceau laser (14) agissant sur une zone de fusion (16), des grains de poudre (37), accélérés dans un canal de grains de poudre (26) au moyen d'un gaz d'accélération, sous forme d'un faisceau de grains de poudre (26) sortant d'une ouverture de sortie (28) du canal de grains de poudre (26), et dans lequel on réduit l'apport de gaz depuis l'environnement de la zone de fusion (16) par un courant de gaz protecteur (56) produit au moyen d'un capuchon (52) et entourant le jet de grains de poudre (22), lequel courant est produit à partir du capuchon (52) et d'un élément (68) d'homogénéisation de l'écoulement disposé dans celui-ci sous forme d'un courant de gaz protecteur (56) dans la direction azimutale, présentant un profil d'écoulement sensiblement homogène autour d'un axe médian longitudinal (46) du jet de grains de poudre (22), et le courant de gaz protecteur présentant un tel profil d'écoulement s'écoule en sortant de l'ouverture (54) du capuchon vers la zone de fusion (16), **caractérisé en ce qu'**on guide l'ouverture de sortie (28) du canal de grains de poudre (26) à une distance de la zone de fusion (16) correspondant au plus à 300 fois le diamètre moyen des grains de poudre (37), et **en ce qu'**on accélère les grains de poudre (37) dans la tête d'accélération des grains de poudre (24) de telle sorte qu'ils suivent essentiellement une droite (46) sur le trajet allant jusqu'à la masse fondue (48).

23. Procédé selon la revendication 22, **caractérisé en ce que** le courant de gaz protecteur (56) présentant un profil d'écoulement présentant sensiblement peu ou pas de turbulences, circule vers la zone de fusion (16) en entourant le faisceau de grains de poudre (22).

24. Procédé selon la revendication 22 ou 23, **caractérisé en ce qu'**on guide le capuchon (52) à une distance telle de la zone de fusion (16) que la distance correspond au plus au double du diamètre intérieur de l'ouverture (54) du capuchon.

25. Procédé selon l'une des revendications 22 à 24, **caractérisé en ce qu'**on guide l'ouverture (54) du capuchon à une distance de la zone de fusion (16) qui correspond au moins à un diamètre intérieur de l'ouverture (54) du capuchon.

26. Procédé selon l'une des revendications 22 à 25, **caractérisé en ce qu'**on guide l'ouverture de sortie (28) du canal de grains de poudre (26) à une distance de la zone de fusion (16) égale au moins à 50 fois le diamètre moyen (D) des grains de poudre (37).

Fig 4

Fig. 5

Fig.6

Fig 7

Fig 8